# FASCICULE DE BREVET EUROPEEN

(11) **EP 1 052 800 B1**
(45) Date de publication et mention de la délivrance du brevet: **20.09.2006**
(21) Numéro de dépôt: 00201580.8
(22) Date de dépôt: 02.05.2000
(51) Int. Cl.: H04L 7/02, H04L 25/02

(54) **Système de transmission et récepteur avec dispositif de décimation**
Übertragungssystem und Empfänger mit Vorrichtung zur Dezimation
Transmission system and receiver with decimation device

(30) Priorité: 11.05.1999 FR 9906021
(43) Date de publication de la demande: 15.11.2000
(73) Titulaire: Koninklijke Philips Electronics N.V., 5621 BA Eindhoven (NL)
(72) Inventeur: Gay-Bellile, Olivier, 75008 Paris (FR); Dujardin, Eric, 75008 Paris (FR)
(74) Mandataire: van Oudheusden-Perset, Laure E.

(56) Documents cités:
- EP-A- 0 793 363
- WO-A-98/12836
- US-A- 3 810 103

## Description

L'invention concerne un système de transmission comportant au moins un émetteur et un récepteur, le récepteur comportant des moyens de décimation pour générer des données à une fréquence symbole, à partir d'échantillons d'entrée ayant une fréquence d'entrée supérieure à la fréquence symbole et en utilisant des créneaux de communication réservés périodiquement pour transmettre les données générées.

Elle concerne également un récepteur et un dispositif de décimation pour générer des données à une fréquence symbole, à partir d'échantillons d'entrée ayant une fréquence d'entrée supérieure à la fréquence symbole et en utilisant des créneaux de communication réservés périodiquement pour transmettre les données générées.

Elle a de nombreuses applications, notamment dans les systèmes de communication numériques large bande tels que la télévision numérique par câble ou par satellite.

Le brevet américain n°3,810,103 décrit un système de communications dynamiques entre un émetteur et un récepteur qui utilise des moyens d'acquittement sous la forme d'émission de drapeaux pour indiquer si le récepteur est prêt à recevoir des données, si des données ont été transmises par l'émetteur et si le récepteur a bien reçu les données transmises

Le document WO-A-98/12836 décrit un récepteur selon le préambule de la revendication 1.

La présente invention a pour objet de fournir un système de communication programmable en fonction de l'application cible et ayant une architecture statique, c'est-à-dire pouvant supporter des communications à des fréquences variées mais dont le comportement est indépendant des données à transmettre pour pouvoir être validé facilement. Le brevet cité décrit un système prévu pour des communications dynamiques dont le comportement est très dépendant des données transmises. Il ne fournit donc pas de solution au problème posé par l'invention. Dans les systèmes de transmission à répartition partagée, plusieurs émetteurs partagent les mêmes ressources d'un médium de communication. Dans les transmissions partagées en temps, des créneaux temporels de communication sont alloués ou réservés par les différents émetteurs pour transporter leurs informations via le médium à destination de récepteurs destinataires reliés au médium. Lorsque l'ensemble des communications est prévu à l'avance, des créneaux de communication peuvent être pré-alloués selon un schéma statique pour chaque émetteur et aucun conflit ne peut se produire.

Mais lorsque l'ensemble des communications n'est pas prévisible, en particulier lorsque la fréquence symbole à générer en sortie peut varier dans le temps, le schéma purement statique n' est plus utilisable.

Un but de l'invention est d'introduire un peu de dynamisme dans une architecture de type statique de façon à pouvoir générer différentes fréquences de sortie prédéterminées.

L'invention permet également de générer des fréquences de sortie pouvant varier dans le temps.

Pour cela, l'invention comprend un récepteur selon la revendication et un système de transmission selon la revendication 3. On entend ici par dispositif de décimation, un dispositif ayant pour fonction de réduire la fréquence des données reçues. De tels dispositifs sont notamment prévus dans des démodulateurs de systèmes de transmissions numériques pour réduire la fréquence de données qui ont été préalablement sur-échantillonnées. Ici le terme décimation est employé dans un sens plus large pour désigner tout dispositif destiné à réduire la fréquence des données reçues.

Selon l'invention, la fréquence des données reçues est réduite en utilisant une fraction seulement des créneaux pré-alloués pour transmettre les données reçues.

Selon une caractéristique importante de l'invention, le dispositif de décimation comporte des moyens pour émettre une information de validité associée aux données transmises dans lesdits créneaux réservés. Ainsi, les données destinées a être traitées ultérieurement sont transmises avec une information supplémentaire pour indiquer aux organes de traitement ultérieur si la donnée est utilisable ou non. L'ajout de cette information permet en outre de réduire la fréquence des données transmises aux organes ultérieurs, sans modifier le plan d'allocation des ressources du médium de transmission, ni l'architecture du système. Lorsqu'un créneau ne comporte pas d'indicateur signifiant qu'il contient une donnée à traiter, ce créneau peut être considéré comme ne contenant aucune donnée, et donc les données qui s'y trouvent éventuellement sont ignorées.

Selon une autre caractéristique, le dispositif de décimation étant destiné à générer des données à une fréquence symbole à destination d'au moins une unité de traitement commandée par un organe de contrôle, l'invention est remarquable en ce que ledit organe de contrôle comporte des moyens de détection de ladite information de validité pour inhiber le traitement des données associées, par ladite unité de traitement.

La description suivante, faite en regard des dessins ci-annexés, le tout donné à titre d'exemple non limitatif fera bien comprendre comment l'invention peut être réalisée.
La figure 1 est un schéma bloc représentant un exemple de récepteur selon ' invention.
La figure 2 est un diagramme représentant les différents signaux mis en oeuvre dans un récepteur selon l'invention.
La figure 3 est un schéma montrant un dispositif de décimation selon l'invention.
La figure 4 illustre un exemple de système de transmission selon l'invention.

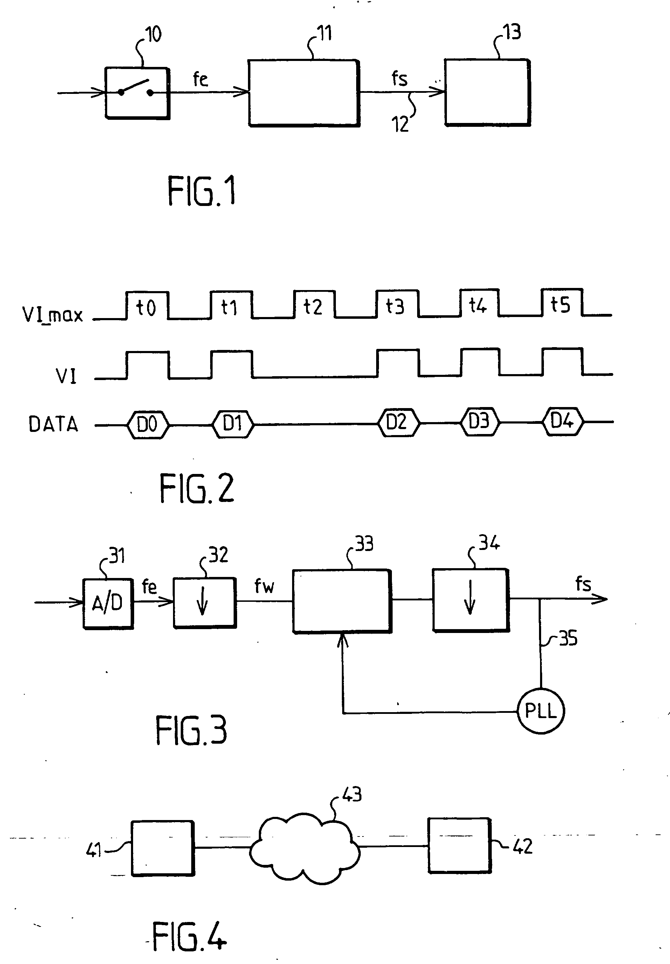

La figure 1 représente un schéma bloc simplifié d'un récepteur selon l'invention. Il comporte au moins :
- un bloc de décimation 11 pour générer des données à une fréquence de sortie fs, avec fs<fe, prédéterminée en fonction de la fréquence symbole souhaitée dans l'application cible, à partir des échantillons d'entrée reçus à la fréquence fe,
- une connexion ou lien de communication 12 pour transférer les données générées à la fréquence de sortie fs par le dispositif de décimation 11 vers un autre composant dans le récepteur, notamment vers une unité de traitement de données 13.

Le dispositif de décimation 11 est prévu pour générer des données à la fréquence de sortie fs dans des créneaux ou plages de temps réservés sur la connexion 12, selon un schéma périodique prédéfini. Ainsi, l'ensemble des communications étant prévu à l'avance, aucun conflit ne peut se produire. Ce schéma statique est utilisable tel quel lorsque le flot de calcul généré par l'application cible est prédictible et indépendant des données transmises. En revanche, lorsque le flot de calculs n'est pas tout à fait périodique, du fait que la fréquence symbole peut varier dans une plage de valeurs importante en fonction de l'application cible considérée, le schéma purement statique n'est plus utilisable.

Le but de l'invention est ainsi d'introduire un peu de dynamisme dans une architecture de type statique pour gérer des données à des fréquences symboles prédéterminées. Susceptibles de correspondre à un grand nombre d'applications telles que des transmissions par câble ou par satellite. Pour cela, l'invention prévoit des moyens pour inhiber l'utilisation (au niveau des organes de traitement situés en aval du dispositif de décimation selon l'invention) des données transmises, à partir des échantillons d'entrée, dans certains créneaux de communication prédéterminés parmi les créneaux réservés. Pour pouvoir répondre à tous les besoins des applications envisagées en terme de fréquence symbole en sortie du récepteur, la fréquence d'allocation des créneaux réservés doit être déterminée en fonction de la fréquence symbole maximum déterminée par la fréquence symbole la plus élevée parmi l'ensemble des applications envisagées. Par exemple pour les transmissions par câble, la fréquence symbole maximum est égale à 7MHz et pour les transmissions par satellite elle est égale à 32 MHz.

Une fois la fréquence de réservation des créneaux de communication déterminée en fonction de la fréquence symbole la plus élevée, le dispositif de décimation est prévu pour générer des données dans les créneaux réservés à une fréquence propre, en fonction, cette fois, de la fréquence symbole demandée par l'application courante. Pour cela, le dispositif de décimation comporte des moyens pour diminuer la fréquence de sortie des données valides destinées à être traitées ultérieurement par des organes de traitement déterminés par l'application.

Selon un mode de réalisation préféré de l'invention générant des signaux représentéssous forme de diagramme à la figure 2, le dispositif de décimation comprend des moyens pour associer un drapeau, appelé drapeau valide, aux données transmises dans les créneaux de communication réservés pour indiquer aux organes de traitement ultérieur si les données transmises sont « valides », c'est-à-dire utilisables. L'intérêt du bit « valide » est de permettre de conserver une architecture statique dans une application dont certaines fonctions ou calculs dépendent des données transmises. Sur le diagramme de la figure 2 :
- le signal VI_max représente les créneaux de communication numérotés t0 à t5, réservés selon un plan d'allocation périodique, en fonction de la fréquence symbole maximum envisagée,
- le signal VI représente le drapeau « valide » associé aux données transmises dans chaque créneau de communication,
- le signal DATA représente les données, notées D0 à D4, transmises à destination des organes de traitement destinataires.

Les organes de traitement destinataires de ces données doivent quant à eux être capables de détecter et de décoder le drapeau valide. Pour cela, le dispositif de décimation peut générer le drapeau « valide » de la façon suivante :
- si une donnée valide est transmise ou produite sous forme de résultat utilisable par un organe de traitement, le drapeau « valide » reçoit par exemple la valeur 1,
- inversement, si aucun résultat n'est produit ou aucune donnée n'est transmise, le drapeau « valide » reçoit la valeur nulle 0.

Le drapeau suit le même chemin que la donnée dont il donne une indication de validité. Par exemple, les multiplexeurs ne font pas de différence entre une donnée validée par un drapeau valant 1 ou une donnée non valide dont le drapeau est à zéro. C'est la même chose pour les registres. En revanche, pour les organes de traitement ou de calcul munis de processeurs fonctionnant à l'aide de programmes de contrôle, le drapeau valide peut jouer un rôle dans le traitement des données. Le programme doit alors être capable de détecter le drapeau pour délivrer une instruction appropriée à l'organe de traitement concerné. Dans le cas d'un filtre, par exemple, qui reçoit des données affectées d'un drapeau « non valide », le programme associé va inhiber l'instruction pour ne pas traiter les données.

La figure 3 représente, à titre d'exemple d'application, un dispositif de décimation programmable selon un mode de réalisation de l'invention convenant particulièrement à un récepteur de télévision numérique, ou set top box, pour démoduler les trames de données numériques reçues via des canaux de transmission variés, notamment par câble, satellite, ondes hertziennes, etc. Le récepteur comprend :
- un convertisseur analogique / numérique 31 pour échantillonner un signal d'entrée à une fréquence d'échantillonnage fe,
- un premier bloc de traitement 32 pour traiter les échantillons reçus et délivrer de nouveaux échantillons à une fréquence fw, fe étant un multiple de fw et fw<fe, comprenant un filtre anti-repliement de spectre pour réaliser une décimation par 2 de la fréquence d'entrée du filtre (la fréquence d'échantillonnage fe) et éviter les problèmes de repliement introduits par la décimation,
- un bloc d'interpolation 33 pour réaliser une décimation non entière de la fréquence d'entrée fw et générer une fréquence double de la fréquence symbole fs,
- un deuxième bloc de traitement 34 comprenant un filtre de Nyquist pour éliminer l'interférence inter symbole introduite par la décimation et des moyens de décimation par 2 pour générer des données à la fréquence symbole,
- une boucle à verrouillage de phase PLL pour réaliser une contre-réaction 35 entre la sortie du filtre de Nyquist 34 et linterpolateur 33 afin d'adapter en temps réel la fréquence générée par l'interpolateur en fonction de la fréquence mesurée en sortie du filtre de Nyquist et de la fréquence de sortie fs souhaitée.

Selon le mode de réalisation représenté à titre d'exemple sur la figure 3, le dispositif de décimation selon l'invention est constitué par les blocs 32, 33 et 34 ainsi que la boucle de contre-réaction 35.

La figure 4 est un schéma général d'un système de transmission selon l'invention comportant un émetteur 41, un récepteur 42 du type de celui de la figure 1 et un canal de transmission 43 représentant par exemple des transmissions par satellite, par câble ou par voie hertzienne, etc.

## Revendications

1. Récepteur comportant des moyens de décimation (11) pour générer des données à une fréquence symbole, à partir d'échantillons d'entrée ayant une fréquence d'entrée supérieure à la fréquence symbole,
**caractérisé en ce que** le récepteur est adapté pour utiliser des créneaux de communication réservés périodiquement pour transmettre les données générées, la périodicité de réservation desdits créneaux étant déterminée en fonction d'une fréquence symbole maximum donnée supérieure à la fréquence symbole et **en ce que** lesdits moyens de décimation comportent des moyens pour émettre une information de validité, indiquant dans lesquels desdits crénaux réservés des données utilisables sont transmises, de sorte que les données utilisables associées à l'information de validité soient transmises dans lesdits créneaux réservés à une fréquence moyenne propre égale à la fréquence symbole.

2. Récepteur selon la revendication 1, lesdits moyens de décimation (11) étant destinés à générer des données à la fréquence symbole à destination d'au moins une unité de traitement (13) commandée par un organe de contrôle, ledit organe de contrôle comportant art des moyens de détection de ladite information de validité pour inhiber ou déclencher le traitement des données associées, par ladite unité de traitement.

3. Système de transmission comportant au moins un émetteur et un récepteur selon la revendication 1.

## Claims

1. A receiver comprising decimation means (11) for generating data at a symbol frequency on the basis of input samples which have an input frequency higher than the symbol frequency, **characterized in that** the receiver is adapted to utilize communication slots reserved periodically for transmitting the generated data, the periodicity of the reservation of said slots being determined as a function of a given maximum symbol frequency that is higher than the symbol frequency, and **in that** said decimation means comprise means for issuing a validity information, which indicates in which of said reserved slots usable data are transmitted, such that the usable data associated with the validity information are transmitted in said reserved slots at an individual average frequency equal to the symbol frequency.

2. A transmission system as claimed in claim 1, wherein said decimation means (11) are designed to generate data at the symbol frequency destined for at least one processing unit (13) controlled by a control member, which control member comprises detection means for said validity information so as to prevent or trigger the processing of associated data by said processing unit.

3. A transmission system comprising at least a transmitter and a receiver as claimed in claim 1.

## Patentansprüche

1. Empfänger mit Mitteln zur Dezimation (11) für die Erzeugung von Daten mit einer Symbolfrequenz, anhand von Eingangsabtastwerten mit einer Eingangsfrequenz, die über der Symbolfrequenz liegt, **dadurch gekennzeichnet, dass** der Empfänger für die Übertragung der erzeugten Daten zur Anwendung periodisch reservierter Kommunikationsfreiräume angepasst ist,
wobei die Periodizität der Reservierung der besagten Freiräume unter Berücksichtigung einer bestimmten höchsten Symbolfrequenz, die über der Symbolfrequenz liegt bestimmt wird, und **dadurch**, dass die besagten Mittel zur Dezimation Mittel für das Senden einer Gültigkeitsinformation enthalten, um anzuzeigen, in welchem der besagten reservierten Freiräume verwendbare Daten übertragen werden, damit die verwendbaren, mit der Gültigkeitsinformation verknüpften Daten in den besagten reservierten Freiräumen mit einer eigenen Durchschnittsfrequenz, die gleich der Symbolfrequenz ist, übertragen werden.

2. Empfänger nach Anspruch 1, wobei die besagten Mittel zur Dezimation (11) vorgesehen sind, Daten mit der Symbolfrequenz in Richtung mindestens einer Verarbeitungseinheit (13) zu erzeugen, gesteuert von einer Steuerschaltung,
wobei die besagte Steuerschaltung Mittel zur Detektion der besagten Information aufweist, um die Verarbeitung der verknüpften Daten durch die besagte Verarbeitungseinheit zu unterdrücken oder auszulösen.

3. Übertragungssystem mit mindestens einem Sender und einem Empfänger nach Anspruch 1.
